# EUROPEAN PATENT APPLICATION

(11) **EP 3 734 113 A1**
(43) Date of publication of application: **04.11.2020**
(21) Application number: 20169289.4
(22) Date of filing: 14.04.2020
(51) Int. Cl.: F16H 3/089, F16H 3/10, F16D 41/08

(54) **APPARATUS FOR DRIVING ELECTRIC VEHICLE AND METHOD OF CONTROLLING THE SAME**

(30) Priority: 02.05.2019 KR 20190051466; 08.05.2019 KR 20190053992
(71) Applicant: LG Electronics Inc., 07336 SEOUL (KR)
(72) Inventor: SUNG, Changwoo, 08592 Seoul (KR); AHN, Youngchan, 08592 Seoul (KR); LEE, Junggu, 08592 Seoul (KR); PARK, Yongsik, 08592 Seoul (KR)
(74) Representative: Vossius & Partner Patentanwälte Rechtsanwälte mbB

(57) **Abstract**

Disclosed is an apparatus for driving an electric vehicle and a method of controlling the same. The apparatus for driving the electric vehicle includes a driving motor, a motor shaft, a first motor gear, a second motor gear, a first driving gear, a second driving gear, a driving shaft, a first clutch, and a second clutch. The second clutch is a selective one-way clutch that functions as a bearing based on an operation of an actuator or a one-way clutch configured to confine the second driving gear and the driving shaft based on a relative speed.

## Description

### BACKGROUND

### 1. TECHNICAL FIELD

The present disclosure relates to an apparatus for driving an electric vehicle and a method of controlling the same.

### 2. DESCRIPTION OF THE RELATED ART

Recently, an electric vehicle that uses power as a power source in substitution for a vehicle using petroleum that causes pollution has been actively developed. A hybrid vehicle that uses both petroleum and power as a power source has also been developed. In this case, the hybrid vehicle is classified as a type of an electric vehicle. Thus, the hybrid vehicle is understood as being included in the electric vehicle.

The electric vehicle includes a battery for supplying power and a driving device that is operated by the battery to revolve a vehicle shaft. The driving device includes a driving motor for generating power through power supplied from the battery and a transmission device (or a gear box) for connecting the driving motor and the vehicle shaft to each other.

The transmission device is understood as a device for deceleration or speed change. In detail, power generated by the driving motor is transmitted to the transmission device, and power transmitted from the transmission device is decelerated or speed-changed and is transmitted to the vehicle shaft.

With regard to the transmission device, the following cited references were published and registered.
1. Registration No. 10-1532834 (published on: January 12, 2015)
2. Title of Invention: Two-step reduction drive apparatus for hybrid and electric vehicles

The cited references disclose a two-step reduction drive apparatus for hybrid and electric vehicles, which includes an input shaft, a counter shaft, and an output shaft that are connected to a driving motor, and includes a first gear and a second gear that are installed on the output shaft.

In particular, the output shaft provides a gear shift sleeve (or a synchronizer) that is selectively coupled to the first gear or the second gear, and thus, the gear shift sleeve slips according to a gear shift command to shift a gear to first or second step.

In this case, the gear reduction drive apparatus has the following problems.
First, a conventional gear reduction drive apparatus for an electric vehicle does not include a clutch for blocking power between a motor and a transmission device during gear shift, and thus, there is a problem in that shocks are generated due to input torque of a motor when a gear that is previously closed is disengaged for gear shift.
Second, in order to overcome such a problem, a friction clutch for blocking power between the motor and the transmission device is additionally included in the apparatus, but there is a problem in that it is complex to control the friction clutch and an overall volume is increased and that product costs due to addition of clutch components are increased.
Third, a conventional synchronizer for gear shift includes a plurality of components such as a hub, a sleeve, a ring, a fork, a cone, and a friction member, and thus, there is a problem in that a structure of the synchronizer is complex and it is difficult to assemble the components. Accordingly, there is a problem in that the components are inaccurately assembled to cause product defects.

### SUMMARY

An object of the present disclosure is to provide an electric vehicle drive apparatus for changing a speed using a selective one-way clutch.

Another object of the present disclosure is to provide an electric vehicle drive apparatus for decoupling a driving shaft and a transmission shaft to reducing force required to change a speed.

Another object of the present disclosure is to provide an electric vehicle drive apparatus for controlling a speed of a driving motor during a speed change procedure and reducing shocks generated during a speed change procedure to change a speed using a speed synchronization procedure.

Another object of the present disclosure is to provide an electric vehicle drive apparatus having simplified components and a simple structure.

The electric vehicle drive apparatus according to the idea of the present disclosure may apply a selective one-way clutch to a second gear. The selective one-way clutch may function as a one-way clutch or a bearing.

The electric vehicle drive apparatus may include a transmission shaft that is spline-coupled to a driving shaft configured as a hollow shaft to integrally revolve with each other, and simultaneously, is to be relatively moved in an axial direction by an actuator.

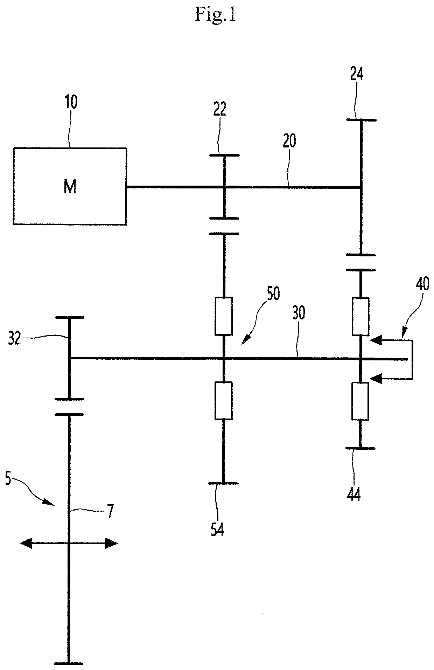

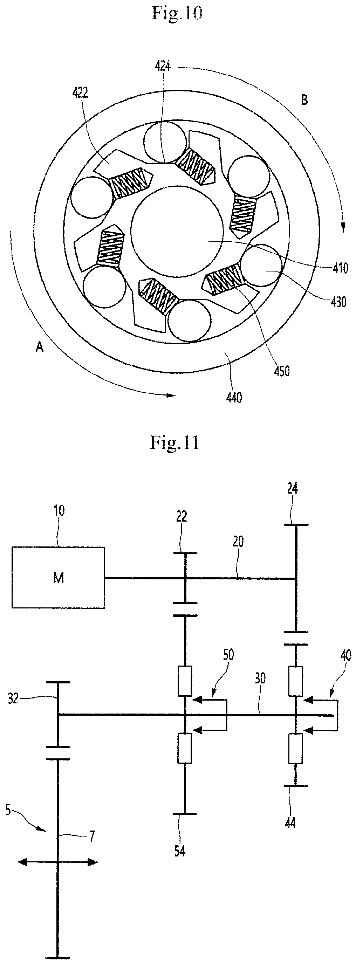

According to one embodiment (a first embodiment) shown in FIGs. 1 to 10, a one-way clutch may be applied to a first gear, and according to another embodiment (a second embodiment) shown in FIG. 11, a selective one-way clutch may also be applied to the first gear.

The electric vehicle drive apparatus according to the idea of the present disclosure may include a driving motor and a motor shaft connected to the driving motor, a first motor gear and a second motor gear that are coupled to an external side of the motor shaft to be spaced apart from each other, a first driving gear and a second driving gear that are spaced apart to be engaged with the first motor gear and the second motor gear, respectively, and a driving shaft disposed outside the first driving gear and the second driving gear and connected to a vehicle shaft.

The electric vehicle drive apparatus may include a first clutch configured to connect the first driving gear to the driving shaft and a second clutch configured to connect the second driving gear to the driving shaft.

In this case, the second clutch may be a selective one-way clutch that functions as a bearing based on an operation of an actuator or a one-way clutch configured to confine the second driving gear and the driving shaft based on a relative speed.

The first clutch may be configured as a one-way clutch or a selective one-way clutch.

Another embodiment of the electric vehicle drive apparatus according to the idea of the present disclosure may include a driving motor and a motor shaft connected to the driving motor, a first motor gear and a second motor gear that are coupled to an external side of the motor shaft to be spaced apart from each other, a first driving gear and a second driving gear that are spaced apart to be engaged with the first motor gear and the second motor gear, respectively, a driving shaft disposed outside the first driving gear and the second driving gear and having a hollow formed therein, a transmission shaft that is spline-coupled to the driving shaft to integrally revolve with each other, and simultaneously, is to be relatively moved in an axial direction by an actuator, and an actuator configured to move the transmission shaft in an axial direction with respect to the driving shaft.

As the actuator moves the transmission shaft in an axial direction, the transmission shaft may be coupled to any one of the first driving gear and the second driving gear and may transmit power to the driving shaft.

In this case, the electric vehicle drive apparatus may further include a first driving bearing and a second driving bearing that are disposed between first driving gear and the driving shaft and between the second driving gear and the driving shaft, respectively, to separately revolve the first driving gear and the second driving gear, and the driving shaft.

That is, the first and second driving gears and the driving shaft may not directly transmit power and may indirectly transmit power through the transmission shaft.

### BRIEF DESCRIPTION OF THE DRAWINGS

FIG. 1 is a schematic diagram showing an electric vehicle driving apparatus according to an embodiment of the present disclosure.
FIG. 2 is a diagram showing a first driving mode of an electric vehicle drive apparatus according to an embodiment of the present disclosure.
FIG. 3 is a diagram showing a second driving mode of an electric vehicle drive apparatus according to an embodiment of the present disclosure.
FIG. 4 is a diagram showing a control configuration for switch of a driving mode of an electric vehicle drive apparatus according to an embodiment of the present disclosure.
FIG. 5 is a flowchart of control of switch to a second driving mode from a first driving mode of an electric vehicle drive apparatus according to an embodiment of the present disclosure.
FIGs. 6 and 7 are diagrams showing a second clutch in a first driving mode of an electric vehicle drive apparatus according to an embodiment of the present disclosure.
FIGs. 8 to 10 are diagrams showing a second clutch in a second driving mode of an electric vehicle drive apparatus according to an embodiment of the present disclosure.
FIG. 11 is a schematic diagram of an electric vehicle drive apparatus according to another embodiment of the present disclosure.
FIG. 12 is a schematic diagram of an electric vehicle drive apparatus according to another embodiment of the present disclosure.
FIG. 13 is a diagram showing a configuration of an electric vehicle drive apparatus according to another embodiment of the present disclosure.
FIG. 14 is a diagram showing a first state of an electric vehicle drive apparatus according to another embodiment of the present disclosure.
FIG. 15 is a diagram showing a second state of an electric vehicle drive apparatus according to another embodiment of the present disclosure.
FIG. 16 is a diagram showing a portion of a transmission shaft of an electric vehicle drive apparatus according to another embodiment of the present disclosure.
FIG. 17 is a diagram showing one lateral surface of a driving gear of an electric vehicle drive apparatus according to another embodiment of the present disclosure.
FIG. 18 is a diagram showing coupling between a transmission shaft and a driving gear of an electric vehicle drive apparatus according to another embodiment of the present disclosure.

### DETAILED DESCRIPTION

Hereinafter, some embodiments of the present disclosure will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

FIG. 1 is a schematic diagram showing an electric vehicle driving apparatus according to an embodiment of the present disclosure.

As shown in FIG. 1, the electric vehicle drive apparatus according to the idea of the present disclosure may include a driving motor 10 and a transmission device (or a gear box) for connecting the driving motor 10 to a vehicle shaft 5.

The driving motor 10 may be understood as an apparatus for generating power through a battery for supplying power. The vehicle shaft 5 may be understood as a part that is connected directly to a wheel or the like. FIG. 1 illustrates the vehicle shaft 5 as one gear connected to the transmission device and a shaft that extends in opposite sides of the gear. This is exemplary and the vehicle shaft 5 may be configured in various ways.

The transmission device may include various gears and shafts. In detail, power generated by the driving motor 10 may be transmitted to the transmission device, and power transmitted from the transmission device may be decelerated or speed-changed and may be transmitted to the vehicle shaft 5. Thus, the transmission device may be configured in various ways for connecting the driving motor 10 and the vehicle shaft 5 to each other. Hereinafter, the configuration of the transmission device according to the idea of the present disclosure will be described in detail.

The electric vehicle drive apparatus according to the idea of the present disclosure may include a motor shaft 20 connected to the driving motor 10 and a driving shaft 30 connected to the vehicle shaft 5. As shown in FIG. 1, the motor shaft 20 and the driving shaft 30 may be spaced apart from each other and may each extend in an axial direction.

In this case, the motor shaft 20 and the driving motor 10 may be directly connected to each other, and the driving shaft 30 and the vehicle shaft 5 may be indirectly connected to each other through a gear. For example, the driving shaft 30 may include a vehicle shaft connection gear 32, and the vehicle shaft 5 may include a driving shaft connection gear 7 engaged with the vehicle shaft connection gear 32.

The vehicle shaft connection gear 32 and the driving shaft connection gear 7 may be installed at the driving shaft 30 and the vehicle shaft 5, respectively, to integrally revolve with the driving shaft 30 and the vehicle shaft 5, respectively. Revolution power of the driving shaft 30 may be transmitted to the vehicle shaft 5 through the vehicle shaft connection gear 32 and the driving shaft connection gear 7.

Connection between the motor shaft 20 and the driving motor 10 and connection between the driving shaft 30 and the vehicle shaft 5 are exemplary and the present disclosure is not limited thereto. That is, the motor shaft 20 and the driving motor 10, and the driving shaft 30 and the vehicle shaft 5 may have various coupling configurations for transmitting power.

The electric vehicle drive apparatus according to the idea of the present disclosure may include a first motor gear 22 and a second motor gear 24, and a first driving gear 42 and a second driving gear 44 that are engaged with the first motor gear 22 and the second motor gear 24, respectively.

In this case, the first motor gear 22 and the first driving gear 42 may be referred to as a first gear, and the second motor gear 24 and the second driving gear 44 may be referred to as a second gear. That is, the first motor gear 22 and the first driving gear 42, and the second motor gear 24 and the second driving gear 44 may be engaged with each other in different gear ratios. In this case, the gear ratio between the first gear and the second gear may be changed according to a design.

The first motor gear 22 and the second motor gear 24 may be coupled to an external side of the motor shaft 20 to be spaced apart from each other. Thus, the motor shaft 20, the first motor gear 22, and the second motor gear 24 may integrally revolve with each other through the driving motor 10.

That is, the motor shaft 20, the first motor gear 22, and the second motor gear 24 may have the same speed. In this case, the speed may be understood as an angular velocity w corresponding to an angle corresponding to a revolution angle per unit time. Any speed described hereinafter refers to an angular velocity.

In summary, when the driving motor 10 is operated at the predetermined velocity w, the motor shaft 20, the first motor gear 22, and the second motor gear 24 may be understood as revolving at the predetermined velocity w.

The first driving gear 42 and the second driving gear 44 may be disposed on an external side of the driving shaft 30 to be spaced apart from each other. In this case, the driving shaft 30, the first driving gear 42, and the second driving gear 44 may revolve at different speeds. To this end, the electric vehicle drive apparatus according to the idea of the present disclosure may include a first clutch 50 and a second clutch 40.

In particular, the driving shaft 30 may integrally revolve with an electric vehicle of the first driving gear 42 and the second driving gear 44 through the first clutch 50 and the second clutch 40. In this case, the case in which the driving shaft 30 integrally revolves with the first driving gear 42 may be referred to as a first driving mode or a first-stage driving mode. In addition, the case in which the driving shaft 30 integrally revolves with the second driving gear 44 may be referred to as a second driving mode or a second-stage driving mode.

Hereinafter, the first driving mode and the second driving mode will be described in detail.

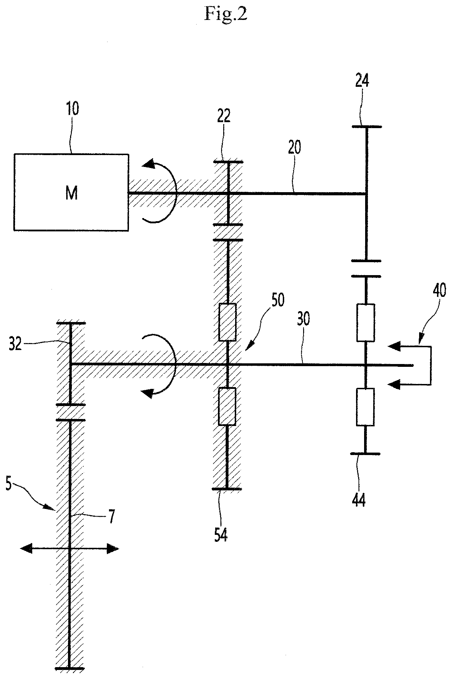

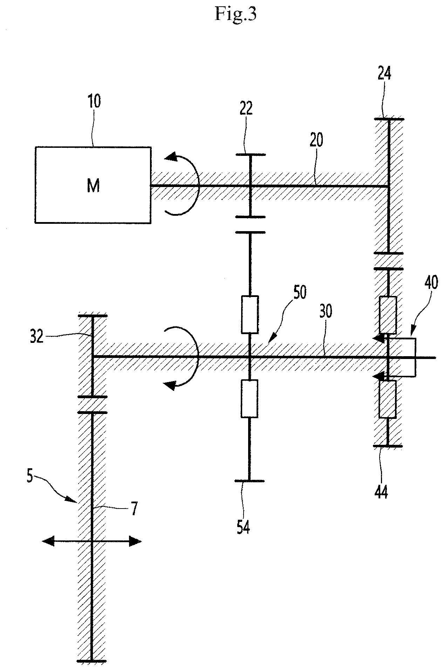

FIG. 2 is a diagram showing a first driving mode of an electric vehicle drive apparatus according to an embodiment of the present disclosure. FIG. 3 is a diagram showing a second driving mode of an electric vehicle drive apparatus according to an embodiment of the present disclosure. For convenience of understanding, a transmission path of power is indicated with slashes in FIGs. 2 and 3.

As shown in FIGs. 2 and 3, in the first driving mode, power may be transmitted through a first gear, and in the second driving mode, power may be transmitted through a second gear. In detail, in the first driving mode shown in FIG. 2, the driving shaft 30 may integrally revolve with the first driving gear 42, and in the second driving mode shown in FIG. 3, the driving shaft 30 may integrally revolve with the second driving gear 44.

The first clutch 50 may perform a function of transmitting power of the first driving gear 42 to the driving shaft 30 in the first driving mode. The second clutch 40 may perform a function of transmitting power of the second driving gear 44 in the second driving mode.

In this case, the first clutch 50 of the electric vehicle drive apparatus according to the idea of the present disclosure may be configured as a one-way clutch, and the second clutch 40 may be configured as a selective one-way clutch. The one-way clutch may be a one-direction clutch and may refer to a connection member configured to transmit power in one direction.

The one-way clutch may be configured in various shapes and to perform various functions. The one-way clutch according to the present disclosure may be configured to connect one shaft and a gear. In addition, when a speed of a gear is higher than a speed of a shaft, the gear and the shaft may be confined with each other, and when the speed of the shaft is higher than the speed of the gear, the gear and the shaft may not be configured with each other. In this case, confinement means that power is transmitted, that is, a shaft and a gear integrally revolve with each other.

The selective one-way clutch may refer to a connection member that selects to function as the one-way clutch or not. That is, when the selective one-way clutch functions as the one-way clutch, the selective one-way clutch may transmit power depending on a speed of the shaft and the gear. In contrast, when the selective one-way clutch does not function as the one-way clutch, the selective one-way clutch may not transmit power irrespective of the speed of the shaft and the gear.

The first clutch 50 may be a one-way clutch and may be configured to transmit power in one direction. That is, in the first driving mode and the second driving mode, the first clutch 50 may be configured to transmit power in one direction.

In detail, the first clutch 50 may be configured to transmit power to the driving shaft 30 from the first driving gear 42 in the first driving mode. That is, in the first driving mode, a speed of the first driving gear 42 is higher than a speed of the driving shaft 30, and thus, the first driving gear 42 and the driving shaft 30 may be confined with each other and may integrally revolve with each other.

The first clutch 50 may be configured not to transmit power to the driving shaft 30 from the first driving gear 42 in the second driving mode. That is, in the second driving mode, when the speed of the first driving gear 42 is lower than the speed of the driving shaft 30, the first driving gear 42 and the driving shaft 30 may not be confined with each other and may revolve at different speeds. In this case, the first driving gear 42 may be understood as idling without transmission of power.

The second clutch 40 may transmit power in one direction like the first clutch 50, or may be configured not to transmit power. In the first driving mode, the second clutch 40 may be configured not to transmit power, and in the second driving mode, the second clutch 40 may be configured to transmit power in one direction.

In this case, when the second clutch 40 is configured not to transmit power, the second clutch 40 may be understood as functioning as a bearing. In other words, when the second clutch 40 does not function as a one-way clutch, the second clutch 40 may function as a bearing. To distinguish therebetween, FIGs. 2 and 3 show the second clutch 40 in different shapes. This is illustrated for convenience of understanding, and the present disclosure is not limited thereto.

In detail, the second clutch 40 may be configured not to transmit power to the driving shaft 30 from the second driving gear 44 in the first driving mode. In this case, the second clutch 40 may correspond to a state in which the second clutch 40 does not function as a one-way clutch, that is, a state in which the second clutch 40 functions as a bearing.

That is, in the first driving mode, the second driving gear 44 and the driving shaft 30 may revolve at different speed rather than being confined with each other irrespective of speeds of the second driving gear 44 and the driving shaft 30. In this case, the second driving gear 44 may be understood as idling without transmission of power.

The second clutch 40 may be configured to transmit power to the driving shaft 30 from the second driving gear 44 in the second driving mode. In this case, the second clutch 40 may function as a one-way clutch. That is, in the second driving mode, a speed of the second driving gear 44 may be higher than a speed of the driving shaft 30, and thus, the second driving gear 44 and the driving shaft 30 may be confined with each other and may integrally revolve with each other.

Based on such the configuration, the driving shaft 30 may receive power using the first driving gear 42 or the second driving gear 44. That is, the electric vehicle drive apparatus may be driven, that is speed-changed at different speeds. Hereinafter, speed change corresponding to switch between the first driving mode and the second driving mode will be described in detail.

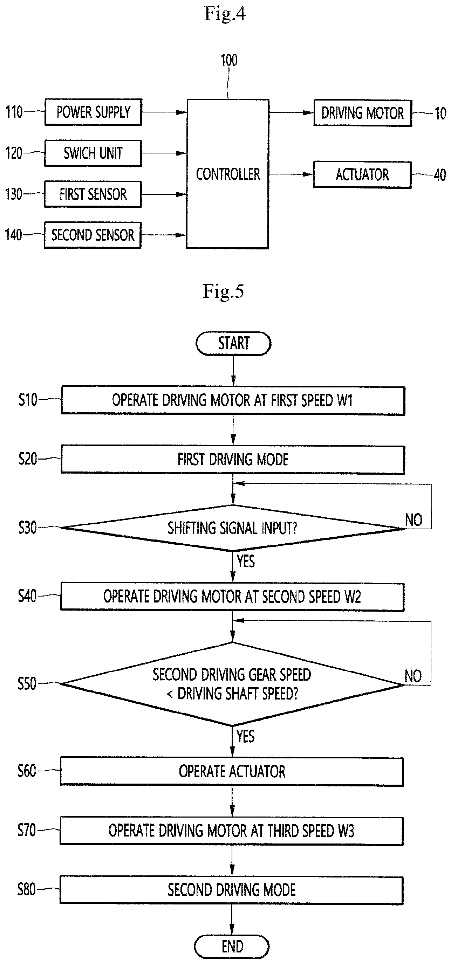

FIG. 4 is a diagram showing a control configuration for switch of a driving mode of an electric vehicle drive apparatus according to an embodiment of the present disclosure.

As shown in FIG. 4, the electric vehicle drive apparatus according to the idea of the present disclosure may include a controller 100. The controller 100 may be included inside an electric vehicle with the electric vehicle drive apparatus installed therein or may be installed outside the electric vehicle. For the electric vehicle drive apparatus, the controller 100 may be separately configured.

The controller 100 may control the driving motor 10. In detail, the controller 100 may control ON/OFF of the driving motor 10. Thus, the controller 100 may control ON/OFF of the electric vehicle drive apparatus as the driving motor 10 is operated and stops being operated.

The controller 100 may control a speed of the driving motor 10. For example, the controller 100 may change the driving motor 10 from any one of a first speed W1, a second speed W2, and a third speed W3 to another one and may operate the driving motor 10. In this case, the first speed W1, the second speed W2, and the third speed W3 may be understood as different speed values.

The electric vehicle drive apparatus according to the idea of the present disclosure may further include an actuator 400 included in the second clutch 40. The actuator 400 may be understood as a portion of the second clutch 40. The actuator 400 may be understood as a member configured to enable the second clutch 40 to function as a one-way clutch or to function as a bearing.

The controller 100 may control an operation of the actuator 400. That is, the controller 100 may control the second clutch 40 to function as a one-way clutch or to function as a bearing. As such, the controller 100 may switch between the first driving mode and the second driving mode.

The electric vehicle drive apparatus according to the idea of the present disclosure may include a power supply 110, a switch unit 120, a first sensor 130, and a second sensor 140. The power supply 110, the switch unit 120, the first sensor 130, and the second sensor 140 may correspond to components for transmitting a predetermined signal or information to the controller 100. Such components are distinguished from each other for convenience of description and may be configured in various ways.

The power supply 110 may be understood as a component for receiving an ON/OFF signal of the electric vehicle drive apparatus and transmitting the ON/OFF signal to the controller 100. For example, the power supply 110 may correspond to a starting device of an electric vehicle with the electric vehicle drive apparatus installed therein.

The switch unit 120 may be understood as a component for receiving a switch signal, that is, a shifting signal of the first driving mode and the second driving mode and transmitting the switch signal to the controller 100. For example, the switch unit 120 may correspond to a transmission device of an electric vehicle with the electric vehicle drive apparatus installed therein.

The first sensor 130 and the second sensor 140 may correspond to a speed sensor for measuring a speed. In detail, the first sensor 130 may correspond to a sensor for measuring a speed of the driving shaft 30, and the second sensor 140 may correspond to a sensor for measuring a speed of the second driving gear 44.

The first sensor 130 and the second sensor 140 may be configured in various forms and may measure a speed. This is a description of a general speed sensor and thus a description thereof is omitted. The electric vehicle drive apparatus according to the present disclosure may include various sensors.

Hereinafter, a speed change procedure will be described in detail based on the above configuration.

FIG. 5 is a flowchart of control of switch to a second driving mode from a first driving mode of an electric vehicle drive apparatus according to an embodiment of the present disclosure.

As shown in FIG. 5, the driving motor 10 may be operated at the first speed W1 (S10) and may be operated in the first driving mode (S20). In other words, when the driving motor 10 is operated in the first driving mode, the driving motor 10 may be understood as being operated at the first speed W1. In this case, the first speed W1 may be determined depending on the torque and speed appropriate for the first gear.

Referring to FIG. 2, in the first driving mode, power may be transmitted to the vehicle shaft 5 through the driving motor 10, the first motor gear 22, the first driving gear 42, and the driving shaft 30. That is, the first driving gear 42 and the driving shaft 30 may be confined with each other by the first clutch 50 and may integrally revolve with each other.

As described above, the second clutch 40 functions as a bearing in the first driving mode, and thus, the driving shaft 30 may revolve irrespective of the second driving gear 44. This may be understood as a state in which the actuator 400 is not operated or an OFF state of the actuator 400.

When a shifting signal is input through the switch unit 120, switch into the second driving mode begins in the first driving mode. First, the driving motor 10 may be changed to the second speed W2 (W2<W1) lower than the first speed W1 from the first speed W1 and may be operated (S40). That is, the driving motor 10 may be decelerated compared with the first driving mode and may be operated.

As the driving motor 10 is decelerated, the first motor gear 22 and the first driving gear 42 may also be decelerated. In this case, the driving shaft 30 may be maintained at an original speed by inertia. That is, a speed of the first driving gear 42 may become lower than a speed of the driving shaft 30. Thus, the first driving gear 42 and the driving shaft 30 may not be confined with each other by the first clutch 50 and may revolve at different speeds.

In this case, as the driving motor 10 is decelerated, the second motor gear 24 and the second driving gear 44 may also be decelerated. The second driving gear 44 may be configured to a higher speed than the first driving gear 42 (Speed of second driving gear > speed of first driving gear).

For example, as shown in FIGs. 1 to 3, the first driving gear 42 may be configured as a larger gear than the first motor gear 22. The second driving gear 44 may be configured as a similar gear to the second motor gear 24. Thus, even if the first motor gear 22 and the second motor gear 24 are driven at the same speed, the second driving gear 44 may revolve more rapidly than the first driving gear 42.

However, this is exemplary and the second driving gear 44 may be configured in various forms having a higher speed than the first driving gear 42. In other words, the first driving gear 42 may have a higher reduction gear ratio than the second driving gear 44.

Thus, a speed of the driving shaft 30 in first driving mode may be lower than a speed of the second driving gear 44. However, the second clutch 40 functions as a bearing in the first driving mode, and thus, the second driving gear 44 and the driving shaft 30 may not be confined with each other.

As a shifting signal is input and a speed of the driving motor 10 is gradually reduced, a speed of the second driving gear 44 may become lower than the driving shaft 30. In other words, the driving motor 10 may be decelerated to lower a speed of the second driving gear 44 compared with a speed of the driving shaft 30. Thus, the second speed W2 may be understood as a speed of the driving motor 10 in which a speed of the second driving gear 44 becomes lower than a speed of the driving shaft 30.

When a speed of the second driving gear 44 becomes lower than a speed of the driving shaft 30 (S55), the actuator 400 may be operated (S60). That is, the second clutch 40 may function as a one-way clutch by the actuator 400.

The driving motor 10 may be changed to the third speed W3 (W2<W3) higher than the second speed W2 from the second speed W2 and may be operated (S70). That is, the driving motor 10 may be accelerated and may be operated.

As the driving motor 10 is accelerated, the second motor gear 24 and the second driving gear 44 may also be accelerated. Thus, the second driving gear 44 revolves more rapidly than the driving shaft 30, and the second driving gear 44 and the driving shaft 30 may be confined with each other by the second clutch 40 and may integrally revolve with each other.

As described above, the first driving gear 42 may be designed to revolve more slowly than the second driving gear 44. Thus, the first driving gear 42 and the driving shaft 30 may not be confined with each other by the first clutch 50 and may revolve at different speeds.

As a result, the driving motor 10 may be operated at the third speed W3 (S70) and may be operated in the second driving mode (S80). In other words, when the driving motor 10 is operated in the second driving mode, the driving motor 10 may be understood as being operated at the third speed W3. In this case, the third speed W3 may be determined depending on the torque and speed appropriate for the second gear.

Referring to FIG. 3, in the second driving mode, power may be transmitted to the vehicle shaft 5 through the driving motor 10, the second motor gear 24, the second driving gear 44, and the driving shaft 30. That is, the second driving gear 44 and the driving shaft 30 may be confined with each other and may integrally revolve with each other.

Through this procedure, the first driving mode may be switched to the second driving mode. In this case, with regard to revolution of the driving shaft 30, the driving shaft 30 may be continuously accelerated rather than being decelerated during a procedure of switching to the second driving mode from the first driving mode. That is, shifting shock may not be transmitted to the driving shaft 30 and the vehicle shaft 5.

In the second driving mode, switch into the first driving mode may be conversely performed in the same way as in the first driving mode. That is, shifting shock may not be transmitted to the driving shaft 30 and may be continuously reduced.

With regard to an operation of the driving motor 10, the driving motor 10 may be continuously speed-changed without removing motor torque. In particular, as a speed of the driving motor 10 is appropriately controlled, the driving motor 10 may be speed-changed as continuously as possible, that is, shifting shock may be reduced.

Hereinafter, the second clutch 40 corresponding to a selective one-way clutch will be described in detail. In this case, the first clutch 50 corresponding to a one-way clutch has a general configuration, and thus, a detailed description thereof is omitted.

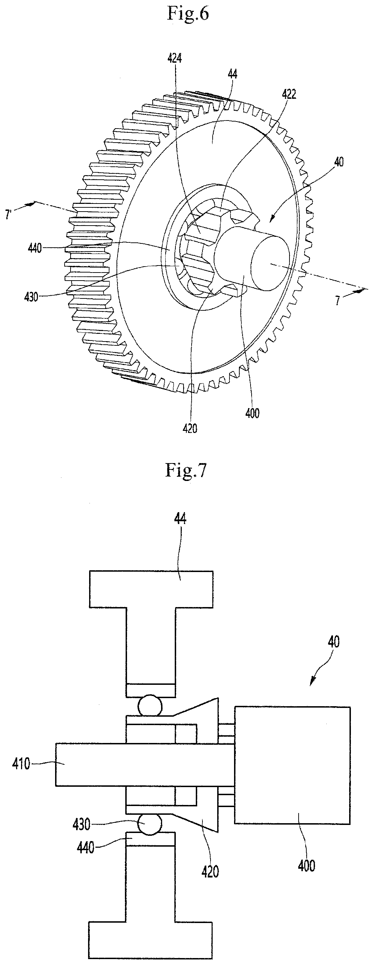

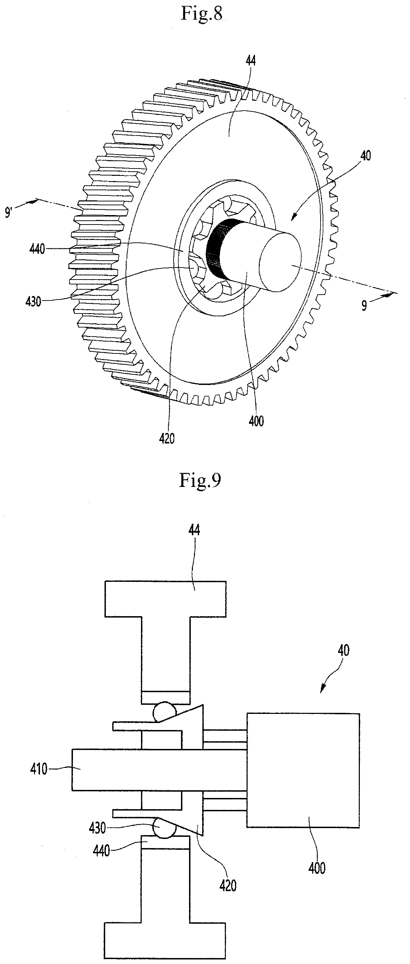

FIGs. 6 and 7 are diagrams showing a second clutch in a first driving mode of an electric vehicle drive apparatus according to an embodiment of the present disclosure. FIGs. 8 to 10 are diagrams showing a second clutch in a second driving mode of an electric vehicle drive apparatus according to an embodiment of the present disclosure. For convenience of understanding, the second clutch 40 and the second driving gear 44 are illustrated together.

As shown in FIGs. 6 to 9, the second clutch 40 may include the actuator 400. In this case, the actuator 400 may be coupled to one side of the driving shaft 30. That is, the actuator 400 may be fixed to the driving shaft 30 and may revolve together.

For example, referring to FIGs. 1 to 3, the driving shaft 30 may extend in an axial direction and may have one end at which the vehicle shaft connection gear 32 connected to the vehicle shaft 5 is installed. In addition, the first driving gear 42 and the second driving gear 44 may be coupled to an external side of the driving shaft 30 to be spaced apart from each other in an axial direction.

In this case, the first driving gear 42 may be disposed adjacent to the vehicle shaft connection gear 32 compared with the second driving gear 44. Thus, the vehicle shaft connection gear 32, the first driving gear 42, and the second driving gear 44 may be sequentially disposed in an axial direction. In addition, the actuator 400 may be coupled to the other end of the driving shaft 30 adjacently to the second driving gear 44.

The second clutch 40 may include an outer race 440 and an inner race 420 that are disposed inside the second driving gear 44 in a radial direction. In this case, the outer race 440 may be configured in a ring shape and may be fixed to an inner circumference of the second driving gear 44. That is, the outer race 440 may integrally revolve with the second driving gear 44.

The inner race 420 may be disposed inside the outer race 440 in a radial direction. The inner race 420 may be disposed outside the driving shaft 30 in a radial direction. The inner race 420 may be configured to be moved in an axial direction by the actuator 400.

The second clutch 40 may further include a ball bearing 430 disposed between the outer race 440 and the inner race 420. The plurality of ball bearings 430 may be disposed between the outer race 440 and the inner race 420 to be spaced apart from each other in a circumferential direction. Although six ball bearings 430 are illustrated in the drawing, this is merely exemplary.

By the ball bearing 430, the inner race 420 may revolve at a different speed from the outer race 440. In summary, the inner race 420 is connected to the actuator 400, and thus, may integrally revolve with the driving shaft 30. The outer race 440 may integrally revolve with the second driving gear 44.

Thus, the driving shaft 30 and the second driving gear 44 may revolve at different speeds by the ball bearing 430. That is, this may correspond to a state in which the second clutch 40 functions as a bearing. As shown in FIGs. 6 and 7, in the first driving mode, the driving shaft 30 and the second driving gear 44 may be connected to the each other to freely revolve by the ball bearing 430.

As the actuator 400 is operated, the inner race 420 may be moved and the second clutch 40 may function as a one-way clutch. As shown in FIGs. 8 and 9, the inner race 420 may be inserted into the second driving gear 44 to penetrate the same. Thus, the ball bearing 430 may be disposed as shown in FIG. 10.

As shown in FIG. 10, a ball bearing accommodator 424 on which the ball bearing 430 is accommodated and a ball bearing protrusion 422 for partitioning the ball bearing accommodator 424 may be formed on the inner race 420. The inner race 420 may include a ball bearing support 450 for elastically supporting the ball bearing 430.

The ball bearing protrusion 422 may be bent in one direction. Thus, one side and the other side of the ball bearing accommodator 424 may be formed to have different angles. The ball bearing support 450 may be obliquely disposed and may support the ball bearing 430.

In this case, when the outer race 440 revolves in a direction A, the outer race 440 may be confined with the inner race 420, and when the outer race 440 revolves in a direction B, the outer race 440 may not be confined with the inner race 420. The directions A and B may refer to relative revolution as the sum of revolution.

For example, when both the outer race 440 and the inner race 420 revolve in the direction A, if a speed of the outer race 440 is higher than the inner race 420, the outer race 440 may be indicated to revolve in the direction A. When a speed of the inner race 420 is higher than the outer race 440, the outer race 440 may be indicated to revolve in the direction B.

When the outer race 440 revolves in the direction A, the ball bearing 430 may be spaced apart from the ball bearing support 450. The ball bearing 430 may be inserted between the outer race 440 and the inner race 420. Thus, as the outer race 440 revolves, revolution force may be transmitted to the inner race 420 through the ball bearing 430.

When the outer race 440 revolves in the direction B, the ball bearing 430 may be elastically supported by the ball bearing support 450. As the outer race 440 revolves, the ball bearing 430 may revolve while moving in a direction in which the ball bearing support 450 is compressed. That is, revolution force of the outer race 440 may not be transmitted to the inner race 420.

In summary, in first driving mode, the second clutch 40 may be disposed as shown in FIGs. 6 and 7 and may function as a bearing. In the second driving mode, the second clutch 40 may be disposed as shown in FIGs. 8 to 10 and may function as a one-way clutch. Thus, in the second driving mode, when a speed of the second driving gear 44 is higher than a speed of the driving shaft 30, the second driving gear 44 and the driving shaft 30 may be confined with each other and may integrally revolve with each other.

FIG. 11 is a schematic diagram of an electric vehicle drive apparatus according to another embodiment of the present disclosure.

As shown in FIG. 11, both the first clutch 50 and the second clutch 40 of the electric vehicle drive apparatus according to the idea of the present disclosure may be configured as a selective one-way clutch. That is, unlike in the description of FIGs. 1 to 11, the first clutch 50 may also be configured as a selective one-way clutch but not a one-way clutch. Hereinafter, only a difference from the above description will be described and the whole description except for contradiction is quoted.

The first clutch 50 that functions as a selective one-way clutch may function as a one-way clutch or a bearing. In this case, the first clutch 50 may function as a one-way clutch in the first driving mode. Thus, when a speed of the first driving gear 42 is higher than a speed of the driving shaft 30, the first driving gear 42 and the driving shaft 30 may be confined with each other and may integrally revolve with each other.

The first clutch 50 may function as a bearing or a one-way clutch in the second driving mode. When the first clutch 50 functions as a bearing, the first clutch 50 and the driving shaft 30 may not be confined with each other irrespective of a speed.

When the first clutch 50 functions as a one-way clutch, the driving shaft 30 may not also be confined with the first driving gear 42. This is because the driving shaft 30 confined with the second driving gear 44 revolves more rapidly than the first driving gear 42.

In summary, in first driving mode, the first clutch 50 may function as a one-way clutch and the second clutch 40 may function as a bearing. In the second driving mode, the first clutch 50 may function as a one-way clutch or a bearing and the second clutch 40 may function as a one-way clutch.

In other words, when the first clutch 50 function as a bearing and the second clutch 40 function as a one-way clutch, the second driving mode may be executed. When the first clutch 50 functions as a one-way clutch and the second clutch 40 function as a bearing, the first driving mode may be executed. When the first clutch 50 and the second clutch 40 function as a one-way clutch, the second driving mode may be executed.

Both the first clutch 50 and the second clutch 40 may function as a bearing. That is, this may correspond to a state in which the driving shaft 30 is not confined with the first driving gear 42 and the second driving gear 44. This state may be understood as a third driving mode or a neutral state.

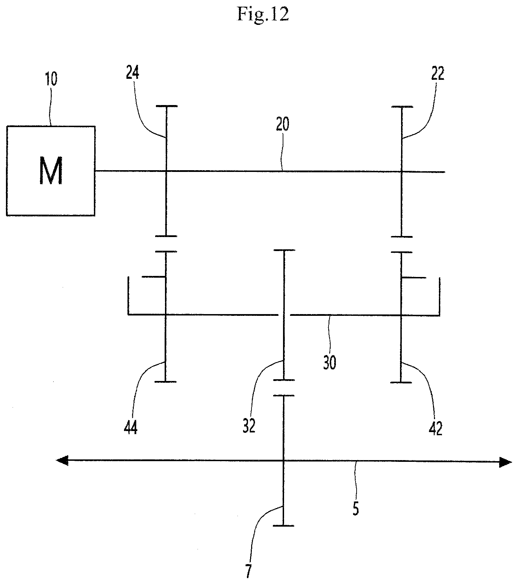

FIG. 12 is a schematic diagram of an electric vehicle drive apparatus according to another embodiment of the present disclosure.

In the electric vehicle drive apparatus according to another shown in FIG. 12, the first motor gear 22 and the second motor gear 24 may be coupled to an external side of the motor shaft 20 to be spaced apart from each other. The first driving gear 42 and the second driving gear 44 may be coupled to an external side of the driving shaft 30 to be spaced apart from each other. In this case, the first motor gear 22 and the second motor gear 24 may integrally revolve with the motor shaft 20. In contrast, the first driving gear 42 and the second driving gear 44 may integrally revolve with the driving shaft 30.

In other words, the first motor gear 22 and the second motor gear 24 may be coupled to an external side of the motor shaft 20 and may revolve depending on revolution of the motor shaft 20. In contrast, the first driving gear 42 and the second driving gear 44 may be coupled to an external side of the driving shaft 30 to differently revolve from each other.

Thus, power of the first driving gear 42 and the second driving gear 44 that are engaged with the first motor gear 22 and the second motor gear 24 and revolve may not be directly transmitted to the driving shaft 30. Through such a configuration, the driving shaft 30 of the electric vehicle drive apparatus according to the idea of the present disclosure may be coupled to any one of the first driving gear 42 and the second driving gear 44 to receive power therefrom. Hereinafter, this will be described in detail.

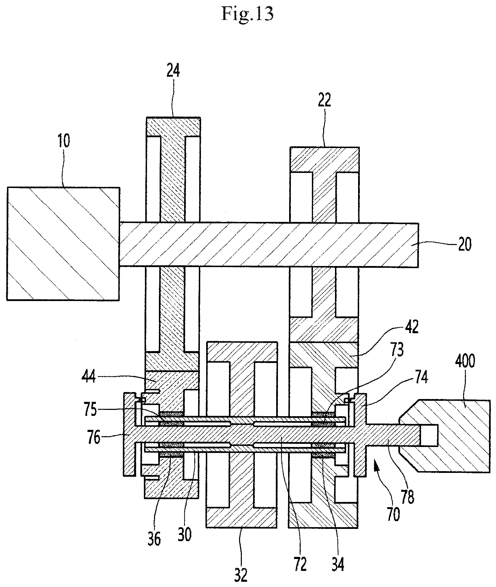

FIG. 13 is a diagram showing a configuration of an electric vehicle drive apparatus according to another embodiment of the present disclosure. In FIG. 13, a part including the vehicle shaft 5 is omitted for convenience of description. The sizes of gears and shaft or the like are exemplary and the present disclosure is not limited thereto.

As shown in FIG. 13, the electric vehicle drive apparatus according to the idea of the present disclosure may include a transmission shaft 70 and the actuator 400. In this case, the driving shaft 30 may be configured as a hollow shaft with a hollow formed therein.

The transmission shaft 70 may be spline-coupled to the driving shaft 30. In detail, the transmission shaft 70 may integrally revolve with the driving shaft 30, and may be coupled to the driving shaft 30 to be moved in an axial direction with respect to the driving shaft 30. In this case, the actuator 400 may correspond to a component for moving the transmission shaft 70 in an axial direction with respect to the driving shaft 30.

As the actuator 400 moves the transmission shaft 70 in an axial direction, the transmission shaft 70 may be coupled to any one of the first driving gear 42 and the second driving gear 44. Thus, power may be transmitted to the driving shaft 30 from any one of the first driving gear 42 and the second driving gear 44.

The transmission shaft 70 may include a transmission shaft body 72 and a first transmission shaft connector 74 and a second transmission shaft connector 76 that each extend from the transmission shaft body 72. In detail, the transmission shaft body 72 may extend in an axial direction. The first and second transmission shaft connectors 74 and 76 may extend in an outer radial direction from the transmission shaft body 72.

The transmission shaft body 72 may be disposed inside the driving shaft 30. In particular, the transmission shaft body 72 may correspond to a portion that is spline-coupled to the driving shaft 30. That is, an outer circumference of the transmission shaft body 72 and an inner circumference of the driving shaft 30 may be spline-coupled to each other. The spline coupling may be formed in various ways, and for example, the outer circumference of the transmission shaft body 72 and the inner circumference of the driving shaft 30 may include uneven structures that are pressed-fit against each other.

The first transmission shaft connector 74 and the second transmission shaft connector 76 may be disposed at opposite sides of the driving shaft 30 in an axial direction. That is, the driving shaft 30 may be understood as being disposed between the second transmission shaft connector 76 and the first transmission shaft connector 74 in an axial direction. The first driving gear 42 and the second driving gear 44 that are disposed at an external side of the driving shaft 30 in a radial direction may also be understood as being disposed between the second transmission shaft connector 76 and the first transmission shaft connector 74 in an axial direction.

The first transmission shaft connector 74 and the second transmission shaft connector 76 may be shaped like a circular plate. In this case, the first transmission shaft connector 74 and the second transmission shaft connector 76 may be configured with a larger diameter than the driving shaft 30. However, the first transmission shaft connector 74 and the second transmission shaft connector 76 may have a smaller diameter than the first driving gear 42 and the second driving gear 44.

Thus, as shown in FIG. 13, the transmission shaft 70 formed by the transmission shaft body 72 and the transmission shaft connectors 74 and 76 may be configured with a dumbbell shape or a shape 'H'. In summary, the transmission shaft 70 may be formed by sequentially disposing the second transmission shaft connector 76, the transmission shaft body 72, and the first transmission shaft connector 74 at one side in an axial direction.

The first transmission shaft connector 74 and the second transmission shaft connector 76 may be spaced apart from the driving shaft 30 in an axial direction. This is because, when the transmission shaft 70 is moved in an axial direction by the actuator 400, interference with the driving shaft 30 needs to be prevented.

In this case, when the actuator 400 moves the transmission shaft 70 in an axial direction, the first transmission shaft connector 74 and the first driving gear 42 may be coupled to each other or the second transmission shaft connector 76 and the second driving gear 44 may be coupled to each other. Accordingly, power may be transmitted to the driving shaft 30 from any one of the first driving gear 42 and the second driving gear 44.

In particular, one of the first transmission shaft connector 74 and the first driving gear 42 may be inserted into the other to be coupled thereto, or one of the second transmission shaft connector 76 and the second driving gear 44 may be inserted into the other to be coupled thereto. Coupling between the first transmission shaft connector 74 and the first driving gear 42 and between the second transmission shaft connector 76 and the second driving gear 44 will be described below in detail.

The transmission shaft 70 may further include a transmission shaft extension 78 connected to the actuator 400. The transmission shaft extension 78 may extend from the transmission shaft body 72 in an axial direction. That is, the actuator 400 may be installed at one side of the transmission shaft 70 in an axial direction and may move the transmission shaft 70 in an axial direction.

The transmission shaft extension 78 may be understood as extend in an outer axial direction from any one of the first transmission shaft connector 74 and the second transmission shaft connector 76. For example, as shown in FIG. 13, the transmission shaft extension 78 may extend in an outer axial direction from the first transmission shaft connector 74.

In other words, the first transmission shaft connector 74 may be formed between the transmission shaft body 72 and the transmission shaft extension 78. Thus, the transmission shaft 70 may be understood as being sequentially disposing the second transmission shaft connector 76, the transmission shaft body 72, the first transmission shaft connector 74, and the transmission shaft extension 78 in an axial direction.

The transmission shaft 70 may further include transmission bearings 73 and 75 disposed between the transmission shaft 70 and the driving shaft 30 to be moved in an axial direction while being spline-coupled to the driving shaft 30. The transmission bearings 73 and 75 may be understood as guiding movement of the transmission shaft 70 in an axial direction.

The transmission bearing may include the first transmission bearing 73 and the second transmission bearing 75 that are spaced apart from each other in an axial direction. In particular, the first transmission bearing 73 and the second transmission bearing 75 may be disposed at opposite sides in an axial direction based on a portion to which the driving shaft 30 and the transmission shaft 70 is spline-coupled. Thus, the transmission bearings 73 and 75 may stably support the transmission shaft 70.

As described above, the first driving gear 42 and the second driving gear 44 may be configured to separately revolve from the driving shaft 30. Accordingly, driving bearings 34 and 36 may be disposed between the first driving gear 42 and the second driving gear 44, and the driving shaft 30.

The transmission bearing may include a first driving bearing 34 and a second driving bearing 36 that are spaced apart from each other in an axial direction. In this case, the first transmission bearing 73 and the second transmission bearing 75 may be disposed inside the first driving bearing 34 and the second driving bearing 36 in a radial direction, respectively.

In summary, the transmission shaft 70, the first transmission bearing 73, the driving shaft 30, the first driving bearing 34, and the first driving gear 42 may be sequentially disposed in an outer direction from an inner radial direction. The transmission shaft 70, the second transmission bearing 75, the driving shaft 30, the second driving bearing 36, and the second driving gear 44 may be sequentially disposed in an outer direction from an inner radial direction.

Such a structure is exemplary and the present disclosure is not limited thereto. Hereinafter, transmission of power in an arrangement state based on movement of the transmission shaft 70 will be described in detail.

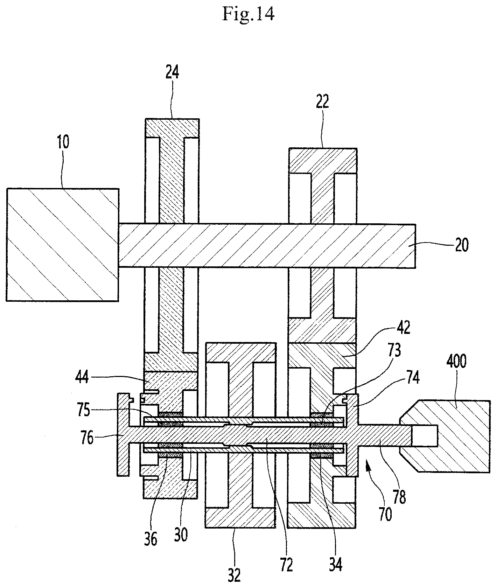

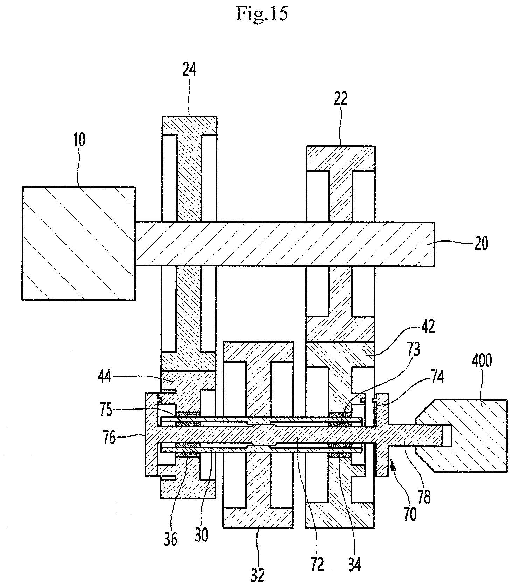

FIG. 14 is a diagram showing a first state of an electric vehicle drive apparatus according to another embodiment of the present disclosure. FIG. 15 is a diagram showing a second state of an electric vehicle drive apparatus according to another embodiment of the present disclosure. In this case, FIG. 13 corresponds to a neutral state or a stop state. In other words, in the state of FIG. 13, power may not be transmitted to the vehicle shaft 5.

The first state shown in FIG. 14 may correspond to a state in which the actuator 400 moves the transmission shaft 70 to one side in an axial direction. In detail, this may correspond to a state in which the actuator 400 moves the transmission shaft 70 in a direction to be away from the actuator 400

The first state may correspond to a state in which the first driving gear 42 is coupled to the first transmission shaft connector 74. As described above, the first driving gear 42 may correspond to a first gear connected to the first motor gear 22. Accordingly, the first state may be understood as a first-stage state.

When the driving motor 10 is operated in the first state, the motor shaft 20 may revolve and the first motor gear 22 and the second motor gear 24 may remove. In addition, the first driving gear 42 and the second driving gear 44 that are engaged with the first motor gear 22 and the second motor gear 24, respectively, may revolve.

In this case, the first driving gear 42 and the second driving gear 44 may be configured with a different gear ratio from the first motor gear 22 and the second motor gear 24, and thus, the first driving gear 42 and the second driving gear 44 may revolve at a different speed from the first motor gear 22 and the second motor gear 24.

The first transmission shaft connector 74 coupled to the first driving gear 42 may revolve, and the transmission shaft 70 may revolve. The driving shaft 30 coupled to the transmission shaft 70 may revolve and may transmit power to the vehicle shaft 5. In summary, power may be transmitted to the driving motor 10, the first motor gear 22, the first driving gear 42, the transmission shaft 70, and the driving shaft 30.

In this case, power transmitted to the driving motor 10, the second motor gear 24, and the second driving gear 44 may not be transmitted to the driving shaft 30. That is, the second driving gear 44 may revolve at a different speed from the driving shaft 30 by the second driving bearing 36.

The second state shown in FIG. 15 may correspond to a state in which the actuator 400 moves the transmission shaft 70 toward the other side of an axial direction. In detail, this may correspond to a state in which the actuator 400 moves the transmission shaft 70 in a direction to approach the actuator 400.

The second state may refer to a state in which the second driving gear 44 and the second transmission shaft connector 76 are coupled to each other. As described above, the second driving gear 44 may correspond to a second gear coupled to the second motor gear 24. Thus, the second state may be understood as a second-stage state.

When the driving motor 10 is operated in the second state, the motor shaft 20 may revolve and the first motor gear 22 and the second motor gear 24 may remove. The first driving gear 42 and the second driving gear 44 that are engaged with the first motor gear 22 and the second motor gear 24 may revolve.

The second transmission shaft connector 76 coupled to the second driving gear 44 may revolve, and the transmission shaft 70 may revolve. The driving shaft 30 coupled to the transmission shaft 70 may revolve and may transmit power to the vehicle shaft 5. In summary, power may be transmitted to the driving motor 10, the second motor gear 24, the second driving gear 44, the transmission shaft 70, and the driving shaft 30.

In this case, power transmitted to the driving motor 10, the first motor gear 22, and the first driving gear 42 may not be transmitted to the driving shaft 30. That is, the first driving gear 42 may revolve at a different speed from the driving shaft 30 by the first driving bearing 34.

As such, as the actuator 400 moves the transmission shaft 70 toward one side or the other side of an axial direction, power may be differently transmitted to the driving shaft 30. Hereinafter, coupling between the driving gears 42 and 44 and the transmission shaft 70 will be described in detail.

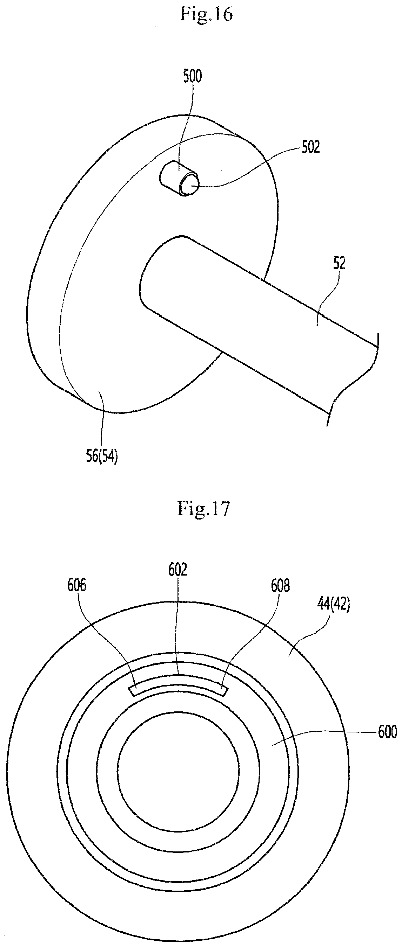

FIG. 16 is a diagram showing a portion of a transmission shaft of an electric vehicle drive apparatus according to another embodiment of the present disclosure. FIG. 17 is a diagram showing one lateral surface of a driving gear of an electric vehicle drive apparatus according to another embodiment of the present disclosure.

For convenience of description, FIG. 16 shows a portion of the transmission shaft 70 in an axial direction and FIG. 17 shows one lateral surface of the first driving gear 42 or the second driving gear 44.

Coupling between the first driving gear 42 and the first transmission shaft connector 74 and coupling between the second driving gear 44 and the second transmission shaft connector 76 may be achieved in the same way. That is, the transmission shaft 70 may have the same coupling form at opposite sides in an axial direction. Thus, a coupling form of one side of the transmission shaft 70 is illustrated and described, and a description thereof may also be applied to a coupling form of the other side.

Hereinafter, the first driving gear 42 or the second driving gear 44 will be described as driving gears 42 and 44, and the first transmission shaft connector 74 or the second transmission shaft connector 76 will be described as the transmission shaft connectors 74 and 76.

As shown in FIG. 16, the transmission shaft connectors 74 and 76 may include a connection protrusion 500 that is formed to be inserted into the driving gears 42 and 44. In this case, the connection protrusion 500 may include a first connection protrusion that is formed on the first transmission shaft connector 74 to be inserted into the first driving gear 42 and a second connection protrusion that is formed on the second transmission shaft connector 76 to be inserted into the second driving gear 44.

The connection protrusion 500 may protrude in an axial direction toward the transmission shaft body 72 from the transmission shaft connectors 74 and 76. The connection protrusion 500 may be formed on one lateral surface of the transmission shaft connectors 74 and 76 adjacent to the transmission shaft body 72 in an axial direction.

Although FIG. 16 illustrates only one connection protrusion 500, the plurality of connection protrusions 500 may be formed. For example, the plurality of connection protrusions 500 may be formed to be spaced apart from each other in a circumferential direction based on the transmission shaft body 72.

The transmission shaft connectors 74 and 76 may further include a connection ball bearing 502 that protrudes from the connection protrusion 500. In this case, the connection ball bearing 502 may include a first connection ball bearing that protrudes from the first connection protrusion and a second connection ball bearing that protrudes from the second connection protrusion.

In detail, the connection protrusion 500 may be formed a hollow cylindrical shape and may extend in an axial direction. One extending end of the connection protrusion 500 may be open. At least a portion of the connection ball bearing 502 may be inserted into the connection protrusion 500. In this case, an internal space of the connection protrusion 500 may be configured to correspond to the size of the connection ball bearing 502.

Thus, the connection ball bearing 502 may be disposed on the outermost side of the transmission shaft connectors 74 and 76 in an axial direction. In detail, the connection ball bearing 502 may be disposed on the transmission shaft connectors 74 and 76 to be most adjacent to the driving gears 42 and 44. That is, the connection ball bearing 502 may be understood as protruding on the connection protrusion 500 to contact the driving gears 42 and 44.

As shown in FIG. 17, the driving gears 42 and 44 may include a connection groove 602 that is recessed to allow the connection protrusion 500 to be inserted thereinto. The connection groove 602 may include a first connection groove recessed in the first driving gear 42 to allow the first connection protrusion to be inserted thereinto, and a second connection groove recessed in the second driving gear 44 to allow the second connection protrusion to be inserted thereinto.

The connection groove 602 may extend in a circumferential direction at one side of the driving gears 42 and 44 in an axial direction. That is, the connection groove 602 may be understood as a curved groove recessed in an arc shape.

In this case, the connection groove 602 may be received with a changed depth in a circumferential direction. In particular, the connection groove 602 may be formed with a recess depth that is linearly changed in a circumferential direction.

In detail, the connection groove 602 may include a first connection groove end 606 and a second connection groove end 608 that correspond to opposite ends in a circumferential direction. In this case, the second connection groove end 608 may be recessed to a maximum depth to have a step difference from an end of the driving gears 42 and 44. The first connection groove end 606 may be smoothly connected to the end of the driving gears 42 and 44.

That is, the first connection groove end 606 may be formed with a received depth that is increased toward the second connection groove end 608. In addition, the first connection groove end 606 may have a recess depth that is linearly changed not to form a step difference toward the second connection groove end 608.

The driving gears 42 and 44 may include a connection protrusion 600 in which the connection groove 602 is formed. Referring to a cross section of the driving gears 42 and 44 shown in FIGs. 13 to 15, the driving gears 42 and 44 may have an outer circumference that contacts the motor gears 22 and 24 and an inner circumference that contacts the driving bearings 34 and 36. The connection protrusion 600 may protrude in an axial direction between the inner circumference and the outer circumference.

In particular, the connection protrusion 600 may protrude in an axial direction toward the transmission shaft connectors 74 and 76 from the driving gears 42 and 44. The connection protrusion 600 may be formed on one lateral surface in an axial direction of the driving gears 42 and 44, which is adjacent to the transmission shaft connectors 74 and 76.

A coupling procedure of the driving gears 42 and 44 and the transmission shaft connectors 74 and 76 through the above configuration will be described.

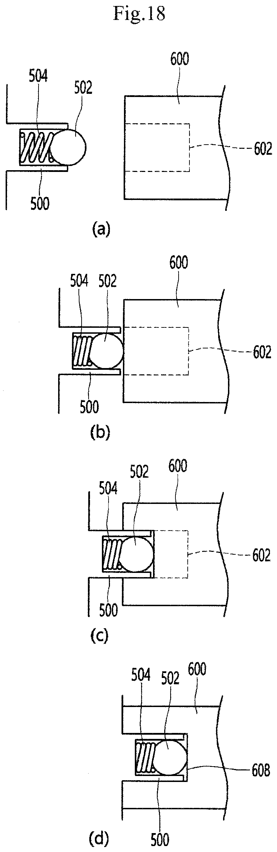

FIG. 18 is a diagram showing coupling between a transmission shaft and a driving gear of an electric vehicle drive apparatus according to another embodiment of the present disclosure. For convenience of description, FIGs. 18A, 18B, 18C, and 18D show a procedure in which the actuator 400 moves the transmission shaft 70 toward one side (the right side in FIG. 18) in an axial direction, which is divided depending on a distance.

FIG. 18A corresponds to a state in which the driving gears 42 and 44 and the transmission shaft connectors 74 and 76 are not coupled to each other. In this case, the driving gears 42 and 44 may be assumed to revolve by an operation of the driving motor 10. The driving gears 42 and 44 and the transmission shaft connectors 74 and 76 are not coupled to each other, and thus, power may not be transmitted to the driving shaft 30.

When the actuator 400 moves the transmission shaft 70, the driving gears 42 and 44 and the transmission shaft connectors 74 and 76 may contact each other as shown in FIG. 18B. In detail, the connection ball bearing 502 and the connection protrusion 600 that are formed to be closest to each other in an axial direction may contact each other. Accordingly, revolution force of the driving gears 42 and 44 may be transmitted to the connection ball bearing 502 and the connection ball bearing 502 may revolve.

In this case, the connection groove 602 and the connection ball bearing 502 may also contact depending on a revolution position of the driving gears 42 and 44. For convenience of description, FIG. 18 shows the case in which the connection ball bearing 502 contacts the connection protrusion 600 in which the connection groove 602 is not formed.

The transmission shaft connectors 74 and 76 may further include a connection elastic member 504 that is installed in the connection protrusion 500 to elastically support the connection ball bearing 502. The connection elastic member 504 may include a first connection elastic member that is installed in the first connection protrusion to elastically support the first connection ball bearing and a second connection elastic member that is installed in the second connection protrusion to elastically support the second connection ball bearing.

The connection elastic member 504 may be installed to be extended or compressed in an axial direction and may elastically support the connection ball bearing 502 in the axial direction. Thus, the connection ball bearing 502 may contact the connection protrusion 600 and may be compressed by the connection elastic member 504, and the connection ball bearing 502 may be inserted into the connection protrusion 500.

As the actuator 400 continuously moves the transmission shaft 70, the connection protrusion 500 may be inserted into the connection groove 602 as shown in FIG. 18C. In particular, the driving gears 42 and 44 may revolve to allow the first connection groove end 606 to pre-contact the connection protrusion 500 compared with the second connection groove end 608.

Thus, the connection protrusion 500 may be inserted into the connection groove 602 along the second connection groove end 608 from the first connection groove end 606. As a result, as shown in FIG. 18D, the connection protrusion 500 may be inserted into the second connection groove end 608, and the driving gears 42 and 44 and the transmission shaft connectors 74 and 76 may be coupled to each other.

When the actuator 400 moves the transmission shaft 70 toward the other side (the left side in FIG. 18) in an axial direction, the driving gears 42 and 44 and the transmission shaft connectors 74 and 76 may be decoupled from each other through the state of FIGs. 18D, 18C, 18B, and 18A.

In this case, FIG. 18A shows a decoupling state and FIG. 18D shows a coupling state. FIGs. 18B and 18C may be understood as a buffering state based on decoupling or coupling. That is, the driving gears 42 and 44 and the transmission shaft connectors 74 and 76 may be coupled and decoupled without large shocks through shapes of the connection ball bearing 502, the connection elastic member 504, and the connection groove 602.

As such, the electric vehicle drive apparatus according to the idea of the present disclosure may switch a first-stage state and a second-stage state without large shocks. For example, when the first-stage state is switched to the second-stage state, a state in which the first driving gear 42 and the first transmission shaft connector 74 are coupled to each other may be switched to a state in which the second driving gear 44 and the second transmission shaft connector 76 are coupled to each other.

In the state in which the first driving gear 42 and the first transmission shaft connector 74 are coupled to each other as shown in FIG. 14, the actuator 400 may move the transmission shaft 70 toward one side (the right side in FIG. 14). Thus, the first connection protrusion may be decoupled from the first connection groove, and the first connection ball bearing may revolve by the first driving gear 42 to reduce shocks.

The first connection groove may be completely decoupled from the first connection protrusion, and the second connection ball bearing and the second driving gear 44 may contact each other to reduce shocks. The second connection protrusion may be inserted into the second connection groove, and the second driving gear 44 and the second transmission shaft connector 76 may be coupled to each other.

As such, the present disclosure may provide a configuration for reducing force required for changing a speed by decoupling the driving shaft and the transmission shaft and reducing a speed synchronization time through a connection ball bearing or the like. Accordingly, shifting shocks may be reduced and a speed may be changed through a relatively simple structure.

The electric vehicle drive apparatus according to the embodiments of the present disclosure as configured above may have the following effects.

Speed change may be continuously performed by a clutch and a driving motor that are included in a driving gear, and thus, it may be advantageous that shifting shocks are not transmitted to a user through a driving shaft and a vehicle shaft.

A one-way clutch may be configured without a complex structure, and it may be advantageous that speed change may be performed by a relatively simple structure according to control of a speed of a driving motor.

In particular, as a selective one-way clutch is switched to a one-way clutch or a bearing by an actuator, it may be advantageous that a shifting time required for speed change may be remarkably reduced and operational reliability is enhanced.

A component (synchronizer) required for speed change may be omitted from a conventional device, and thus, it may be advantageous that a configuration of a transmission device is simplified and shifting shocks generated during speed change is minimized.

It may be advantageous that speed change is relatively simply performed through a driving shaft that is configured as a hollow shaft and a transmission shaft that is spline-coupled to the driving shaft to integrally revolve with each other, and simultaneously, is to be relatively moved in an axial direction by an actuator.

In particular, the transmission shaft may straightly reciprocate to be coupled to the driving gear and may be speed-changed, and thus, it may be advantageous that a shifting time required for speed change is remarkably reduced and operational reliability is enhanced.

As a first driving gear (or a first gear) or a second driving gear (or a second gear) are smoothly coupled to a transmission shaft through speed synchronization, it may be advantageous that shifting shocks and noise are further reduced.

## Claims

1. An apparatus for driving an electric vehicle, comprising:
a driving motor (10) and a motor shaft (20) connected to the driving motor (10);
a first motor gear (22) and a second motor gear (24) that are coupled to an external side of the motor shaft (20) to be spaced apart from each other;
a first driving gear (42) and a second driving gear (44) that are spaced apart to be engaged with the first motor gear (22) and the second motor gear (24), respectively;
a driving shaft (30) disposed outside the first driving gear (42) and the second driving gear (44) and connected to a vehicle shaft (5);
a first clutch (50) configured to connect the first driving gear (42) to the driving shaft (30); and
a second clutch (40) configured to connect the second driving gear (44) to the driving shaft (30),
wherein the second clutch (40) is a selective one-way clutch that is configured to function as a bearing based on an operation of an actuator (400) or a one-way clutch configured to confine the second driving gear (44) and the driving shaft (30) based on a relative speed.

2. The apparatus of claim 1, further comprising:
a controller (100) configured to operate the actuator (400) to make the second clutch (40) function as the one-way clutch when a first driving mode of transmitting power to the driving shaft (30) from the first driving gear (42) is switched to a second driving mode of transmitting power to the driving shaft (30) from the second driving gear (44).

3. The apparatus of claim 2, wherein the controller (100) is configured to control the driving motor (10) to operate at a first speed W1 in the first driving mode and to operate at a third speed W3 in the second driving mode; and
wherein, when the first driving mode is switched to the second driving mode, the controller (100) is configured to control the driving motor (10) to operate at a second speed W2 (W2<W1 and W2<W3) lower than the first speed and the second speed.

4. The apparatus of any one of claims 1 to 3, wherein the first clutch (50) is a one-way clutch configured to confine the first driving gear (42) and the driving shaft (30) based on the relative speed.

5. The apparatus of any one of claims 1 to 4, wherein the second clutch (40) further includes:
an outer race (440) fixed to the second driving gear (44);
an inner race (420) spaced apart from the outer race (440) and provided to be moved by the actuator (400) in an axial direction; and
a ball bearing (430) disposed between the outer race (440) and the inner race (420).

6. The apparatus of claim 5, wherein inner race (420) includes:
a ball bearing accommodator (424) configured to accommodate the ball bearing (430) thereon; and
a ball bearing protrusion (422) configured to partition the ball bearing accommodator (424),
wherein, when the inner race (420) is moved to dispose the ball bearing (430) on the ball bearing accommodator (424) based on the operation of the actuator (400), the second clutch (40) functions as the one-way clutch.

7. The apparatus of any one of claims 1 to 6, wherein the first clutch (50) is a selective one-way clutch that is configured to function as a bearing or a one-way clutch configured to confine the second driving gear (44) and the driving shaft (30) based on a relative speed.

8. The apparatus of any one of claims 1 to 7, wherein, when the first clutch (50) and the second clutch (40) are configured to function as the bearing, the driving shaft (30) revolves at a different speed from the first driving gear (42) and the second driving gear (44).

9. An apparatus for driving an electric vehicle, comprising:
a driving motor (10) and a motor shaft (20) connected to the driving motor (10);
a first motor gear (22) and a second motor gear (24) that are coupled to an external side of the motor shaft (20) to be spaced apart from each other;
a first driving gear (42) and a second driving gear (44) that are spaced apart to engaged with the first motor gear (22) and the second motor gear (24), respectively;
a driving shaft (30) disposed outside the first driving gear (42) and the second driving gear (44) and having a hallow formed therein;
a transmission shaft (70) spline-coupled to the driving shaft (30) and integrally revolving with the driving shaft (30); and
an actuator (400) configured to move the transmission shaft (70) in an axial direction with respect to the driving shaft (30),
wherein, as the actuator (400) moves the transmission shaft (70) in an axial direction, the transmission shaft (70) is coupled to any one of the first driving gear (42) and the second driving gear (44) and transmits power to the driving shaft (30).

10. The apparatus of claim 9, wherein the transmission shaft (70) includes:
a transmission shaft body (72) disposed inside the driving shaft (30); and
a first transmission shaft connector (74) and a second transmission shaft connector (76) that extend in an outward direction of a radial direction from the transmission shaft body (72) and are disposed at opposite sides in an axial direction of the driving shaft (30).

11. The apparatus of claim 10, wherein, as the actuator (400) moves the transmission shaft (70) in an axial direction, the first transmission shaft connector (74) is coupled to the first driving gear (42) or the second transmission shaft connector (76) is coupled to the second driving gear (44), and the transmission shaft (70) is configured to transmit power to the driving shaft (30).

12. The apparatus of any one of claims 9 to 11, further comprising a first driving bearing (34) and a second driving bearing (36) that are disposed between first driving gear (42) and the driving shaft (30) and between the second driving gear (44) and the driving shaft (30), respectively, to separately revolve the first driving gear (42) and the second driving gear (44), and the driving shaft (30).

13. The apparatus of any one of claims 9 to 12, further comprising a transmission bearing (73, 75) disposed between the transmission shaft (70) and the driving shaft (30) to move the transmission shaft (70) in an axial direction in a state in which the transmission shaft (70) is spline-coupled to the driving shaft (30).

14. The apparatus of any one of claims 10 to 13, wherein the transmission shaft (70) further includes a transmission shaft extension (78) that extends in an axial direction from the transmission shaft body (72) to be connected to the actuator (400).

15. The apparatus of any one of claims 10 to 14, wherein the transmission shaft (70) is formed by sequentially disposing the second transmission shaft connector (76), the transmission shaft body (72), and the first transmission shaft connector (74) at one side in an axial direction; and
wherein the driving shaft (30), the first driving gear (42), and the second driving gear (44) are disposed between the second transmission shaft connector (76) and the first transmission shaft connector (74) in an axial direction.
